Europäisches Patentamt

European Patent Office

Office européen des brevets

(11) Veröffentlichungsnummer: **0 402 515**
**A1**

(19)

(12) **EUROPÄISCHE PATENTANMELDUNG**

(21) Anmeldenummer: **89110994.4**

(22) Anmeldetag: **16.06.89**

(51) Int. Cl.5: **B01D 21/00, C02F 1/52**

(43) Veröffentlichungstag der Anmeldung:
**19.12.90 Patentblatt 90/51**

(84) Benannte Vertragsstaaten:
**AT DE FR IT NL**

(71) Anmelder: **SIGMA koncern**
**Trida Kosmonautu 6**
**Olomouc(CS)**

(72) Erfinder: **Látal, Milan, Dipl.-Ing., CSc**
**Foltynova 13**
**Brno(CS)**
Erfinder: **Snajdr, Jaroslav**
**Okruzni 80**
**Brno(CS)**
Erfinder: **Tesarik, Igor, Prof.-Ing.**
**Krondlova 8**
**Brno(CS)**
Erfinder: **Vidiar, Ales, Dipl.-Ing.**
**Unicovska 85**
**Sternberk(CS)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **Verfahren und Schlammkontaktreaktor zur Abwasseraufbereitung durch Pulsationsflockung und Separation.**

(57) Die Erfindung betrifft ein Verfahren und eine Vorrichtung zur Abwasseraufbereitung in einer Flokkenwirbelschicht durch Pulsationsflockung und Abtrennung der Flocken, die dadurch gekennzeichnet sind, daß die Pulsationsflockung und die Separation in einem gemeinsamen Raum bei aufsteigendem Strom des Rohabwassers mit den Fällungsmitteln durchgeführt wird, auf mindestens zwei Niveaus Pulsationen des aufsteigenden Flüssigkeitsstroms mit auf- und abbewegten Siebböden erzeugt werden und der mittlere Geschwindigkeitsgradient des aufsteigenden Flüssigkeitsstroms in Strömungsrichtung verringert wird. Die Pulsationen werden mit Frequenzen bis zu 2 Hz und Amplituden bis zu 1 m angewandt.

Die Vorrichtung weist einen Flockungs- und Separationsraum 3 sowie einen Eindickungsraum 4 auf,

wobei im Flockungs-und Separationsraum 3 ein System 6 aus mindestens zwei mit Durchflußöffnungen 64 versehenen, etwa waagrecht über einander angeordneten und mit einem Pulsationsantrieb 71 auf- und abbewegbaren Siebböden 61, 62, 63 vorgesehen ist.

FIG. 1

## Verfahren und Schlammkontaktreaktor zur Abwasseraufbereitung durch Pulsationsflockung und Separation

Die Erfindung betrifft ein Verfahren sowie eine Vorrichtung zur Abwasseraufbereitung in einer Flockenwirbelschicht durch Pulsationsflockung und Separation der Flocken gemäß den Oberbegriffen der Ansprüche 1 bzw. 8.

Bei den bekannten Verfahren der Flockung und Separation der Flocken werden in senkrechter Richtung wirkende hydraulische Pulse angewandt, um die Flocken der Schlammkontaktschicht in der Schwebe zu halten, wobei die Pulse auf einem Niveau in der Nähe des Behälterbodens in einer Frequenz von etwa 0,5 min$^{-1}$ periodisch erzeugt werden. Entsprechende Vorrichtungen zur Durchführung dieses Verfahrens, also Schlammkontaktreaktoren mit der Schlammkontaktschicht, weisen einen Einlaufraum auf, in dem die hydraulischen Pulsationen durch Unterdruck erzeugt werden, wobei gleichzeitig eine Homogenisierung des Abwassers mit den Fällungsmitteln sowie die Flockung ablaufen. Zur gleichmäßigen Verteilung des Durchflusses auf der Fläche des Separationsraums sind in der Nähe des Behälterbodens ein System aus perforierten Rohrleitungen sowie ein Strömungsgleichrichter vorgesehen.

Der Hauptnachteil der bekannten Verfahrensweise und entsprechender Vorrichtungen liegt darin, daß die Flockung nicht in einem gesteuerten Prozeß abläuft, da die hydraulischen Widerstände, welche sie hervorrufen, statisch sind, wobei weitere Nachteile darin zu sehen sind, daß Vorrichtungen mit getrenntem Einlauf- und Flockungsraum sowie einem komplizierten Rohrleitungssystem und Strömungsgleichrichter mit einem hohen apparativen Aufwand und hohen Investitionskosten verbunden sind. Die kontinuierliche Erzeugung der hydraulischen Pulse führt ferner zu einem hohen Energieverbrauch.

Es sind ferner auch Flockungsverfahren bekannt, bei denen das Abwasser bei aufsteigender Strömung in Querrichtung dazu durchgekämmt wird, wobei das aufwärtsströmende Abwasser durch eine Einrichtung in Querströme aufgeteilt wird, die aus der zentralen Flockungskammer besteht, die beidseitig von Eindickungsräumen und Separationsräumen umgeben ist, wobei in der Flockungskammer ein Mischer mit waagrechten Paddeln pendelartig beweglich angeordnet ist und die Flockungskammer durch innere Trennwände von den Eindickungsräumen abgetrennt ist, die nach oben zusammenlaufen.

Der Nachteil dieses Flockungsverfahrens und entsprechender Vorrichtungen liegt darin, daß das Rohabwasser auf der Fläche des Flockungsraums des Flockungsbeckens nicht gleichmäßig verteilt wird, was die Wirksamkeit des Flockungsprozesses verschlechtert. Hinzu kommt, daß auch diese Vorrichtungen apparativ besonders aufwendig gebaut sind und einen großen umbauten Raum erfordern. Bei der Parallelschaltung mehrerer solcher Vorrichtungen ist es ferner erforderlich, für jeden Schlammkontaktreaktor getrennte Rinnen zum Abfluß des aufbereiteten Abwassers und getrennte Eindickungsräume vorzusehen, was apparativ ebenfalls sehr aufwendig ist und zu hohen Investitionskosten führt, wobei ferner auch eine große Anzahl von Schließorganen erforderlich ist.

Der Erfindung liegt die Aufgabe zugrunde, ein Verfahren sowie eine Vorrichtung zur Abwasseraufbereitung in einer Flockenwirbelschicht durch Pulsationsflockung und Separation der Flocken anzugeben, die in apparativ einfacherer Weise eine hochwirksame Abwasseraufbereitung durch eine neuartige Strömungsführung im Kontaktbereich mit den Schlammflocken anzugeben.

Die Aufgabe wird anspruchsgemäß gelöst.

Die abhängigen Ansprüche betreffen vorteilhafte Ausführungsformen.

Das erfindungsgemäße Verfahren ist dadurch gekennzeichnet, daß

- die Pulsationsflockung und die Separation in einem gemeinsamen Raum bei aufsteigendem Strom des Rohabwassers mit den Fällungsmitteln durchgeführt wird,

- auf mindestens zwei Niveaus Pulsationen des aufsteigenden Flüssigkeitsstroms mit in einer mit der Strömungsrichtung übereinstimmenden Richtung auf- und abbewegbaren Siebböden erzeugt werden

und

- der mittlere Geschwindigkeitsgradient des aufsteigenden Stroms des Rohabwassers in Strömungsrichtung verringert wird.

Die erfindungsgemäße Vorrichtung, die sich insbesondere zur Durchführung dieses Verfahrens eignet, stellt einen Schlammkontaktreaktor mit einem Behälter dar, in dem ein Flockungsraum, ein Separationsraum und ein Eindickungsraum vorgesehen sind und der einen am Boden angeordneten Zufluß für das Rohabwasser mit Fällungsmitteln und einen am Flüssigkeitsspiegel im oberen Teil des Behälters vorgesehenen Abfluß für das aufbereitete Abwasser sowie eine Pulsationseinrichtung zur Erzielung von Pulsationen des behandelten Abwassers aufweist; sie ist dadurch gekennzeichnet, daß

- der Flockungsraum und der Separationsraum zu einem einzigen Flockungs- und Separationsraum vereinigt sind

und
- im Flockungs- und Separationsraum ein System aus mindestens zwei mit Durchlaßöffnungen versehenen, etwa waagrecht und übereinander angeordneten und parallel zur Strömungsrichtung des Abwassers mit vorgegebener Charakteristik auf- und abbewegbaren Siebböden vorgesehen ist.

Nach einer vorteilhaften Weiterbildung vergrößern sich die Abstände zwischen den Siebböden in der Durchflußrichtung des Abwassers, wobei in der unteren Stellung des Systems der Siebböden der unterste Siebboden knapp über dem Boden des Flockungs- und Separationsraums liegt.

Eine andere vorteilhafte Ausführungsform ist dadurch gekennzeichnet, daß der freie Durchflußquerschnitt der Siebböden in Strömungsrichtung größer wird.

Eine andere vorteilhafte Ausführungsform umfaßt mindestens zwei parallelgeschaltete Einheiten, die jeweils einen gemeinsamen Flockungs- und Separationsraum und einen Eindickungsraum aufweisen, wobei entweder die Einheiten durch Zwischenwände voneinander getrennt sind und eine gemeinsame Rinne für das aufbereitete Abwasser aufweisen oder für zwei benachbarte Flockungs- und Separationsräume ein gemeinsamer, dazwischen angeordneter Eindickungsraum vorgesehen ist und jede Einheit eine Rinne für das aufbereitete Abwasser aufweist.

Die Pulsationen werden durch die auf- und abbewegbaren Siebböden erzeugt, wobei die Pulsationen in Form von Schwingungen oder mit Impulscharakteristik erzeugt werden können.

Die Pulsationen weisen vorteilhaft eine Frequenz von bis zu 2 Hz sowie eine Amplitude von bis zu 1 m auf.

Die Bewegung der Siebböden geschieht vorteilhaft mit einem Pulsationsantrieb, der über eine oder mehrere Zugstangen mit den entsprechenden Siebböden verbunden ist, wobei der Pulsationsantrieb eine vorgegebene oder wählbare Hub- bzw. Bewegungscharakteristik aufweisen kann.

Die Siebböden einer Einheit des Schlammkontaktreaktors sind vorteilhaft an einer gemeinsamen Zugstange befestigt, die mit dem Pulsationsantrieb verbunden ist. Bei Vorliegen mehrerer parallelgeschalteter Einheiten können günstigerweise mindestens zwei benachbarte Zugstangen des Systems der Siebböden an einem gleicharmigen, mittig gelagerten Hebel angelenkt sein, der vom Pulsationsantrieb so bewegbar ist, daß sich die Zugstangen gegensinnig auf- und abbewegen.

Die höhere Effektivität bei der Abwasseraufbereitung, die nach dem erfindungsgemäßen Verfahren und mit der erfindungsgemäßen Vorrichtung erzielbar ist, beruht darauf, daß die Pulsationsflokkung und die Separation in einem gesteuerten Prozeß ablaufen, wobei die Geschwindigkeit des aufsteigenden Abwasserstroms im Schlammkontaktreaktor gegenüber dem Stand der Technik mehr als verdoppelt und die Flockungswirkung gegenüber herkömmlichen Vorrichtungen vergleichbarer Größe erheblich intensiviert werden kann. Das Abwasser wird ferner über die Fläche des gemeinsamen Flockungs- und Separationsraums des Schlammkontaktreaktors gleichmäßig verteilt, was ebenfalls zum höheren Wirkungsgrad sowie zu einer Verbesserung der Separationseigenschaften der ausgebildeten Flocken führt. In der erfindungsgemäßen Vorrichtung wird eine gleichmäßige Verteilung des durchfließenden Flüssigkeitsstroms über die Fläche des Flockungs- und Separationsraums bereits durch die Strömungswiderstände in den Siebböden und insbesondere bereits auf dem Niveau oberhalb des untersten Siebbodens erzielt, ohne daß ein getrennter Einlaufraum sowie ein kompliziertes System von perforierten Rohrleitungen und Strömungsgleichrichtern am Behälterboden vorgesehen werden muß, so daß die Erfindungskonzeption zugleich zu einer erheblichen Senkung der Investitionskosten gegenüber dem Stand der Technik bei vergleichbarer Anlagengröße führt. Durch den Wegfall der kontinuierlichen Erzeugung hydraulischer Pulse wird ferner eine deutliche Einsparung an elektrischer Energie erzielt. Die Konzeption eines einzigen Raums, in dem Flockung und Separation gleichzeitig ablaufen, vereinfacht die Konstruktion entsprechender Vorrichtungen bei herabgesetzten Investitionskosten.

Durch Parallelschaltung von Schlammkontaktreaktoren gemäß der Erfindung können die zusammengeschalteten Grundeinheiten so angeordnet werden, daß sie eine gemeinsame Trennwand aufweisen, wodurch das Volumen des umbauten Raums wie auch die Investitionskosten herabgesetzt werden. Es ist ferner möglich, diese Einheiten mit einer gemeinsamen Abflußrinne für das aufbereitete Abwasser zu versehen, wodurch sich die Zahl der erforderlichen Absperrorgane verringern läßt. Bei Parallelschaltung von mindestens zwei benachbarten Einheiten kann ferner der oben erläuterte Hebelantrieb für die Kraftübertragung vom Pulsationsantrieb auf die Siebböden über die Zugstangen eingesetzt werden, was, insbesondere bei Vorrichtungen mit zwei oder mehr solchen Antriebshebeln, erhebliche apparative Einsparungen bei der Pulsationserzeugung erlaubt. Da die Last an beiden Hebelenden etwa gleich ist, ist zur Erzeugung der Pulsationen bzw. der Auf- und Abbewegung der Siebböden lediglich die Überwindung des hydraulischen Widerstands der Siebböden gegenüber der Flüssigkeit erforderlich, was eine signifikante Energieeinsparung im Vergleich mit Vorrichtungen mit hydraulischer Pulserzeugung ergibt.

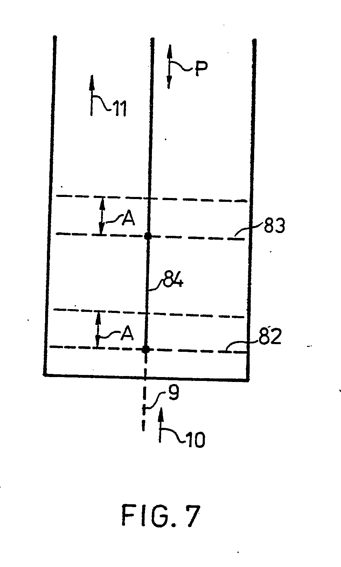

Die hydraulischen Verhältnisse bei der Anwendung des erfindungsgemäßen Verfahrens sind in Fig. 7 schematisch dargestellt, die ein Flockungsbecken mit Flockungs- und Separationsraum 3 mit zwei Niveaus 82, 83 zeigt, die Positionen entsprechender Siebböden zugeordnet sind, wobei die bei den Pulsationen der Siebböden auftretende Amplitude A durch den Doppelpfeil angedeutet ist. Das Rohabwasser strömt in der Einlaufrichtung 10 in den Reaktor ein und verläßt ihn in der Abflußrichtung 11, die, wie die Einlaufrichtung, durch einen Pfeil angedeutet ist. Auf den Niveaus 82, 83 befinden sich Siebböden, die durch eine Verbindung 84 in der Achse 9 der Strömung miteinander verbunden sind, durch welche die Pulsationen P übertragen werden.

Verschiedene Ausführungsbeispiele der erfindungsgemäßen Vorrichtung sind in den Figuren 1 bis 6 dargestellt, worin zeigen:

Fig. 1: Eine perspektivische Ansicht eines erfindungsgemäßen Schlammkontaktreaktors mit rechteckiger Grundfläche;

Fig. 2: eine perspektivische Ansicht eines erfindungsgemäßen Schlammkontaktreaktors aus parallelgeschalteten Einheiten mit gemeinsamer Abflußrinne;

Fig. 3: eine Schnittdarstellung eines erfindungsgemäßen Schlammkontaktreaktors mit parallelgeschalteten Einheiten mit unabhängigen Abflußrinnen;

Fig. 4: einen Schnitt durch einen in der Draufsicht kreisförmigen erfindungsgemäßen Schlammkontaktreaktor;

Fig. 5: einen Antrieb der Zugstangen von zwei benachbarten Systemen von Siebböden sowie

Fig. 6: einen Antrieb der Zugstangen von vier benachbarten Systemen von Siebböden durch Doppelhebelantrieb.

Wie in Fig. 7 schematisch dargestellt, fließt bei der Abwasseraufbereitung nach dem erfindungsgemäßen Verfahren das Rohabwasser mit den Fällungsmitteln aufsteigend durch den Flockungs- und Separationsraum 3 nach oben durch, wobei es auf mindestens zwei Niveaus 82, 83 von entsprechenden Siebböden, die sich parallel zur Achse 9 der Strömung mit Frequenzen bis zu 2 Hz und Amplituden A bis zu 1 m auf- und abbewegen, pulsierend 'durchgekämmt' wird.

Der mittlere Geschwindigkeitsgradient ist in jedem zur Achse 9 der Strömung senkrechten Schnitt durch den Flockungs- und Separationsraum 3 konstant. In Strömungsrichtung sinkt der mittlere Geschwindigkeitsgradient G ab und erreicht mindestens den Wert G = 5 s⁻¹. Durch Veränderung der Durchströmbarkeit der Siebböden auf den Niveaus 82, 83 ändern sich die in der Flüssigkeit wirkenden Schub- und Scherkräfte entsprechend, was die Bildung großer, dichter Flocken unterstützt. Diese Verringerung des mittleren Geschwindigkeitsgradienten kann durch Veränderung des Abstands zwischen den Niveaus 82, 83, durch Veränderung des freien Durchflußquerschnitts der Siebböden auf den Niveaus 82, 83 und/oder durch das Regime der Pulsationen P gesteuert werden. Nach einer vorteilhaften Ausführungsform werden die Pulsationen P für bestimmte, vorgegebene Zeitintervalle unterbrochen.

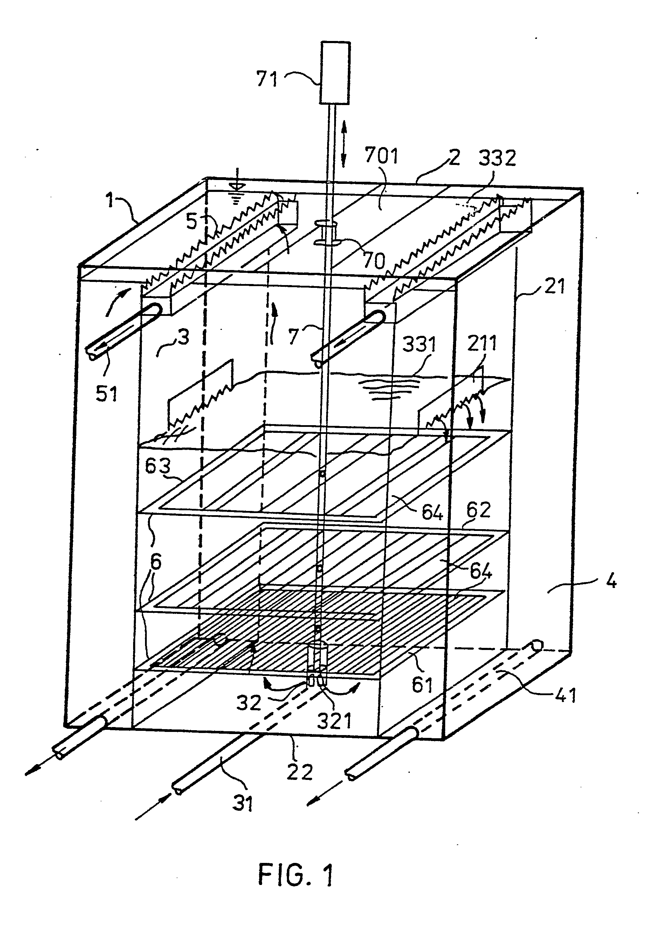

Der in Fig. 1 dargestellte Schlammkontaktreaktor gemäß der Erfindung besteht aus einem rechtwinkligen Behälter 2, der z.B. die Form eines vierseitigen Prismas aufweist und oben offen ist, wobei im Behälter 2 ein zur gemeinsamen Flockung und Separation dienender Flockungs- und Separationsraum 3 ausgebildet ist, der durch die Trennwände 21 vom Eindickungsraum 4 abgetrennt ist. Für den Zufluß des Rohabwassers mit den Fällungsmitteln in den Flockungs- und Separationsraum 3 ist im Boden 22 des Behälters 2 eine Rohrleitung 31 vorgesehen, die mit einem senkrechten Ausflußstutzen 32 und radial angeordneten Öffnungen 321 versehen ist.

Der Flockungs- und Separationsraum 3 ist mit dem Eindickungsraum 4 durch Öffnungen 211 in den Trennwänden 21 verbunden, die zum Überfließen des Schlamms von der Ebene 331 der Flockenwirbelschicht in den Eindickungsraum 4 dienen. Im Flockungs- und Separationsraum 3 ist ein System 6 von Siebböden 61, 62, 63 vorgesehen, die an der gemeinsamen Zugstange 7 in Querrichtung dazu angebracht und etwa waagrecht übereinander angeordnet sind. Jedes System 6 ist durch den unteren Siebboden 61 und den oberen Siebboden 63 vorgegeben. Dieses System kann eine beliebige Anzahl solcher Siebböden, vorteilhaft bis zu 10 Stück, umfassen. Der unterste Siebboden 61 befindet sich in der unteren Stellung knapp über dem Boden 22 des Flockungs- und Separationsraums 3, während sich der oberste Siebboden 63 unterhalb der Öffnung 211 für den Schlammübertritt befindet. Der Abstand zwischen den Siebböden 61, 62, 63 ist veränderlich. Die Siebböden 61, 62, 63 weisen üblicherweise, je nach der Grundrißgestalt des Flockungs- und Separationsraums 3, rechtwinklige oder kreisförmige Form auf. Sie können aus einem beliebigen geeigneten Material bestehen, beispielsweise aus einem Kunststoff oder auch aus Holz. Die Siebböden 61, 62, 63 sind über ihre Fläche mit Durchflußöffnungen 64 versehen, die beliebige Form aufweisen können; sie sind vorzugsweise als Schlitze oder kreisförmige oder quadratische Öffnungen ausgebildet. Der Anteil der Durchflußfläche der Siebböden 61, 62, 63, d.h. der freie Durchflußquerschnitt, vergrößert sich vorteilhaft in Strömungsrichtung des nach aufwärts durch den Reaktor hindurchströmenden Abwassers und beträgt beim untersten Siebboden mindestens 10 % der Gesamtfläche und beim obersten Siebboden 63 höchstens 90 % der Gesamtfläche. Die gemeinsame Zugstange 7 geht durch die Mitte der Flächen der Siebböden 61, 62, 63 hindurch, die durch die Führung 70 in senkrechter Lage gehalten wird, die in einer Befestigungsschelle 701 gelagert ist. Die Zugstange 7 ist mit einem Pulsationsantrieb 71 versehen, der beispielsweise insbesondere als kinematischer Mechanismus ausgebildet ist, der eine Drehbewegung in eine Verschiebebewegung umwandelt, z.B. ein Kurbelmechanismus oder ein Druckluftzylinder mit doppelt wirkendem Kolben.

Im oberen Teil des Behälters 2 des Schlammkontaktreaktors 1 sind am Flüssigkeitsspiegel 332 des aufbereiteten Abwassers Rinnen 5 für den Abfluß des aufbereiteten Abwassers vorgesehen, die in den Abfluß 51 für das aufbereitete Abwasser münden. Im Boden 22 des Behälters 2 ist im Eindickungsraum 4 die Schlammabführungsleitung 41 vorgesehen.

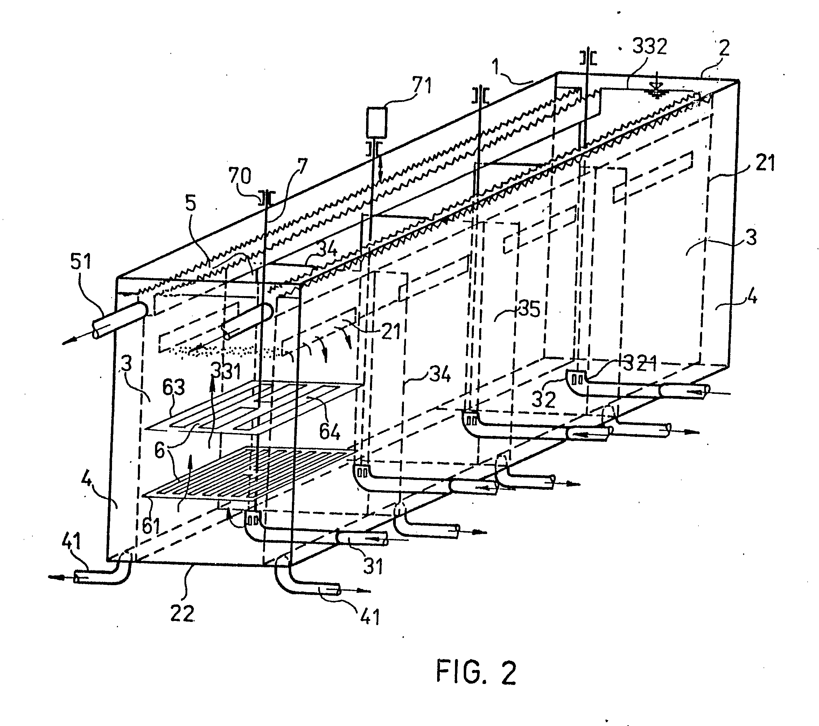

Bei der in Fig. 2 dargestellten alternativen erfindungsgemäßen Ausführungsform besteht der Schlammkontaktreaktor 1 aus parallelgeschalteten Einheiten 35, von denen jede aus einem Flockungs- und Separationsraum 3 sowie einem Eindickungsraum 4 besteht, wobei jeder Flockungs- und Separationsraum 3 mit einem System 6 von mindestens zwei auf-und abbewegbaren Siebböden 61, 63 versehen ist. Der Flockungs- und Separationsraum 3 ist vom Eindickungsraum 4 jeweils durch Zwischenwände 34 abgetrennt. Die Eindickungsräume 4 der Einheiten 35 sind in den stirnseitigen Teilen sowie im hinten liegenden Teil des Behälters 2 vorgesehen und von den Flockungs- und Separationsräumen 3 der Einheiten 35 durch Trennwände 21 getrennt, die mit Öffnungen 211 für den Schlammüberlauf versehen sind. Die zum Abfluß des aufbereiteten Abwassers dienende Rinne 5 ist für alle Einheiten 35 gemeinsam vorgesehen.

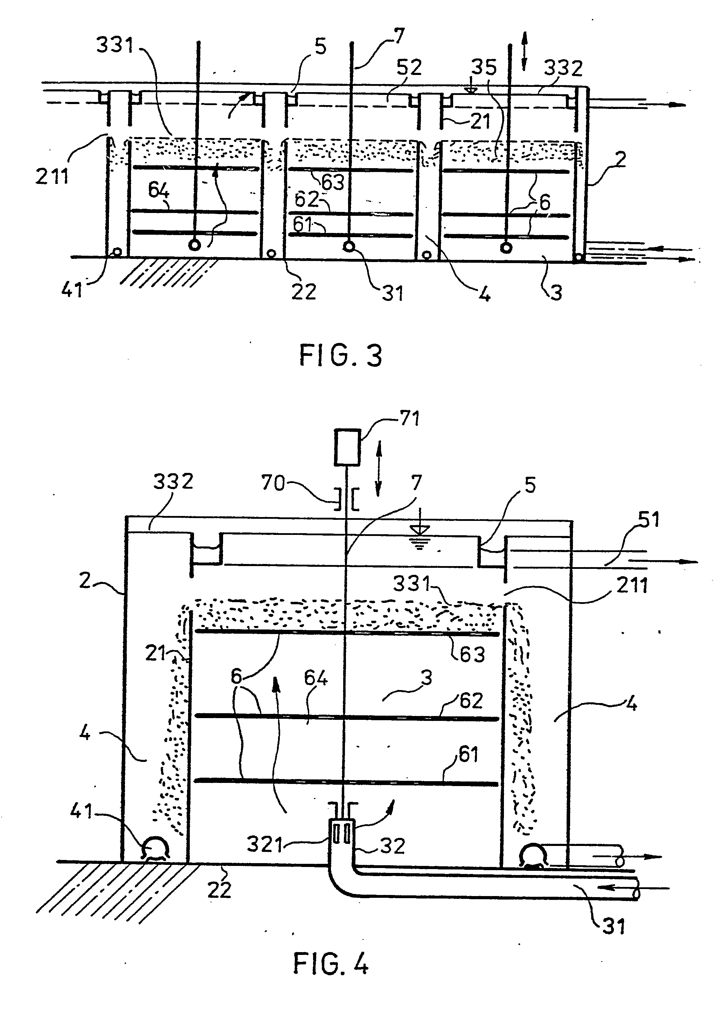

Bei der in Fig. 3 dargestellten Weiterbildung der erfindungsgemäßen Vorrichtung ist der Schlammkontaktreaktor 1 aus parallelgeschalteten Einheiten 35 aufgebaut, die jeweils aus einem Flockungs- und Separationsraum 3 sowie einem Eindickungsraum 4 bestehen, der jeweils für zwei benachbarte Flockungs- und Separationsräume 3 gemeinsam vorgesehen ist. Am Boden 22 des Flockungs- und Separationsraums 3 jeder Einheit 35 ist ein Zufluß 31 für das Rohabwasser mit den Fällungsmitteln angeordnet, welcher der Länge nach mit (nicht dargestellten) Ausflußöffnungen versehen ist. Jede Einheit 35 besitzt bei dieser Ausführungsform eine Rinne 5 zum Abfluß des aufbereiteten Abwassers, die in eine gemeinsame Abflußrinne 52 einmündet.

Bei der in Fig. 4 dargestellten weiteren Ausführungsform der erfindungsgemäßen Vorrichtung besteht der Schlammkontaktreaktor 1 aus einem zylindrischen Behälter 2 mit einem zentral vorgesehenen Flockungs- und Separationsraum 3, der ringförmig von einem Eindickungsraum 4 umgeben ist. Der Flockungs- und Separationsraum 3 sowie der Eindickungsraum 4 sind durch die Trennwand 21 voneinander getrennt, die Öffnungen 211 für den Schlammüberlauf aufweist. Der Zufluß 31 für das Rohabwasser mit den Fällungsmitteln mündet am Boden 22 in der Mitte des Flockungs- und Separationsraums 3 und ist mit einem Ausflußstutzen 32 mit Öffnungen 321 versehen. Die auf- und abbewegbaren Siebböden 61, 62, 63 sind entsprechend kreisscheibenförmig ausgebildet. Die Rinne 5 für die Abführung des aufbereiteten Abwassers ist auf der Höhe des Flüssigkeitsspiegels 332 des aufbereiteten Abwassers im Behälter 2 vorgesehen, während die Schlammabführungsleitung 41 am Boden 22 des Eindickungsraums 4 angeordnet ist.

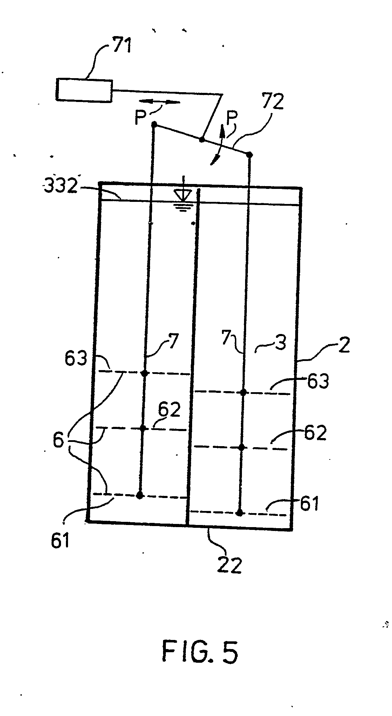

In Fig. 5 ist eine besondere Ausführungsform des erfin dungsgemäßen Pulsationsantriebs 71 für zwei benachbarte Systeme 6 von Siebböden 61, 62, 63 dargestellt. Der Pulsationsantrieb 71 ist gelenkig mit einem mittig gelagerten gleicharmigen Hebel 72 verbunden, an dem zwei Zugstangen 7 angelenkt sind, mit denen wiederum die Siebböden 61, 62, 63 verbunden sind. Die Hin- und Herbewegung des Pulsationsantriebs 71 führt zu entsprechenden Pulsationen P und damit zu einer Auf- und Abbewegung der entsprechenden Zugstangen 7 mit den Siebböden 61, 62, 63. Der unterste Siebboden 61 befindet sich in der Nähe des Bodens 22 des Gehäuses 2 des Flockungs- und Separationsraums 3.

Der Flüssigkeitsspiegel 332 ist ferner durch einen Pfeil angedeutet.

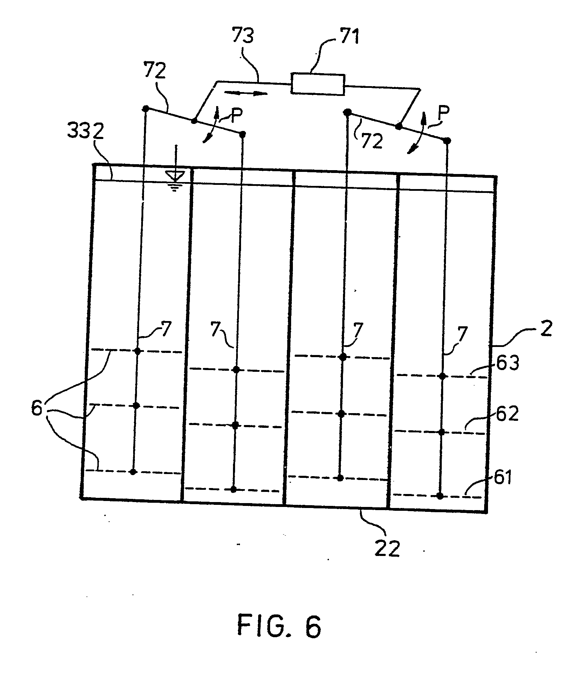

In Fig. 6 ist ein Vierfachantrieb für vier benachbarte Systeme 6 von auf- und abbewegbaren Siebböden 61, 62, 63 schematisch dargestellt, wobei sich die Siebböden 61 wiederum in der Nähe des Bodens 22 des Behälters 2 befinden; der Flüssigkeitsspiegel 332 ist wieder durch einen Pfeil angedeutet. Die Zugstangen 7 der vier Systeme 6 sind zu je zwei an zwei Hebeln 72 angelenkt, die ihrerseits ähnlich wie bei der Vorrichtung von Fig. 5 von einem Pulsationsantrieb 71, der nunmehr doppelt wirkend ausgebildet ist, über eine Antriebsstange 73 betätigt werden, wobei die durch die Doppelpfeile angedeuteten Pulsationen P auftreten.

Bei den in den Fig. 5 und 6 dargestellten Antriebssystemen für die Siebböden 61, 62, 63 über Zugstangen 7 wird entsprechend die Kraft des Pulsationsantriebs 71 aufgrund der Hebel 72 phasenverschoben auf die daran angelenkten Zugstangen 7 übertragen.

Wie insbesondere aus den Fig. 1 und 2 hervorgeht, fließt das Rohabwasser mit den Fällungsmitteln durch den Zufluß 31 über den Ausflußstutzen 32 durch die radialen Öffnungen 321 oder durch (nicht dargestellte) Ausflußöffnungen im Zufluß 31 am Boden 22 des Behälters 2 in den Flockungs- und Separationsraum 3 mit der Flockenwirbelschicht, wo das nach oben strömende Abwasser durch das System 6 der auf-und abbewegten Siebböden 61, 62, 63 mit den Durchflußöffnungen 64 seiherartig durchgekämmt wird. Die Pulsationen können dabei auch mit Unterbrechungen angewandt werden. Durch die Pulsation des Systems 6 wird das hindurchströmende Fluid bereits vom Boden 22 des Flockungs- und Separationsraums 3 gleichmäßig verteilt, wobei die Bewegung des Systems 6 zugleich zu einer Änderung der Strömungsgeschwindigkeit führt, die etwa der Aufsteiggeschwindigkeit entspricht. Der mittlere Gradient der Strömungsgeschwindigkeit ist in einer waagrechten Ebene im Flockungsund Separationsraum 3 jeweils konstant. In der Strömungsrichtung sinkt der mittlere Gradient der Geschwindigkeit nach oben hin ab. Beim Durchströmen durch die Öffnungen 64 in den Siebböden 61, 62, 63 erhöht sich plötzlich die Strömungsgeschwindigkeit proportional zum freien Durchflußquerschnitt der Siebböden 61, 62, 63, was die Bildung von großen Flocken unterstützt. Der Flockungs- und Separationsprozeß in der Flockenwirbelschicht des Schlammkontaktreaktors 1 kann einerseits durch Einstellung des mittleren Geschwindigkeitsgradienten über den Abstand zwischen den Siebböden 61, 62, 63 des Systems 6 oder des Strömungswiderstands der Siebböden 61, 62, 63 durch entsprechende Veränderung des freien Durchflußquerschnitts und andererseits durch das angewandte Pulsationsregime über die Betätigung der Zugstange 6 durch den Pulsationsantrieb 71 gesteuert werden. Das aufbereitete Abwasser steigt nach oben und läuft in die Rinnen 5 über, durch die es in die Abflußleitung 51 für aufbereitetes Wasser gelangt; alternativ wird das Abwasser, wie aus Fig. 3 hervorgeht, aus mehreren Rinnen 5 in eine gemeinsame Abflußrinne 52 für das aufbereitete Abwasser geführt. Die Flocken treten aus der Ebene 331 der Flockenwirbelschicht (vgl. die Fig. 1, 2 und 4) durch die Öffnungen 211 in der Trennwand 21 in den Eindickungsraum 4 über; durch die Schlammabführungsleitung 41 wird bei kleinen Schlammkontaktreaktoren 1 der Schlamm aus dem gesamten Eindickungsraum 4 und bei großen Schlammkontaktreaktoren 1 mit Einheiten 35 der Schlamm allmählich aus den einzelnen Abschnitten periodisch abgeführt.

### Beispiel

Im folgenden sind von einem praktischen Ausführungsbeispiel stammende Daten und Ergebnisse angeführt, die unter Anwendung des erfindungsgemäßen Verfahrens mit einer erfindungsgemäßen Vorrichtung erzielt wurden.

Es wurde ein Rohabwasser mit pH 7,4 bei einer Temperatur von 12 °C unter labormäßigen Bedingungen aufbereitet (CHSB = 5,84 mg $O_2/l$; $Fe^{3+}$ = 1,28 mg/l; Trübung 17,6 ZF). Dieses Rohabwasser enthielt als Koagulationsmittel $FeCl_3 \cdot H_2O$ in einer Menge von 60 mg/l; es wurde in einen Flockungs- und Separationsraum mit einem Fassungsvermögen von 0,06 $m^3$ eingeführt, in dem es bei Durchfluß von unten nach oben in einem Durchsatz von 0,08 l/s auf vier Niveaus im Abstand von 0,2 m in Pulsation versetzt wurde, wobei die Frequenz 0,2 Hz betrug.

Das abfließende aufbereitete Abwasser besaß folgende Werte: pH = 5,7; CHSB = 2,32 mg $O_2/l$; $Fe^{3+}$ = 4,48 mg/l; Trübung 8,4 ZF.

Bei Verringerung des Abstands der vier Niveaus der Siebböden auf 0,15 m wurden folgende Werte des aufbereiteten Abwassers erzielt: pH = 5,8; CHSB = 2,30 mg $O_2/l$; $Fe^{3+}$ = 2,80; Trübung 3,8 ZF.

Das erfindungsgemäße Verfahren und die erfindungsgemäße Vorrichtungskonzeption der Pulsationsflockung und Separation lassen sich allgemein auf die Wasseraufbereitung durch Flockungsschichten anwenden. Die Erfindungskonzeption läßt sich ferner auch auf anderen Gebieten einsetzen, wo kolloidale Lösungen und Suspensionen durch chemische oder biologische Flockung aufbereitet werden, wobei durch die entsprechende Strömungsführung und Pulsation der Flüssigkeit eine Vergröberung der suspendierten Teilchen erzielt wird, beispielsweise bei Neutralisationsprozessen bei der Beseitigung von Abwässern aus metallurgischen Prozessen, z.B. Galvanikabwässern, sowie der biologischen Reinigung von Abwässern.

Die Erfindung kann ferner auch bei bereits bestehenden herkömmlichen Schlammkontaktreaktoren oder Absetzbecken vorteilhaft angewandt werden, wobei die Zwischenwände, durch welche bei herkömmlichen Vorrichtungen separate Flockungsräume gebildet werden, entfernt werden und entsprechende Siebbodensysteme mit Pulsationsantrieb vorgesehen werden.

### Ansprüche

1. Verfahren zur Abwasseraufbereitung in einer Flockenwirbelschicht durch Pulsationsflockung und Separation der Flocken,
**dadurch gekennzeichnet, daß**
- die Pulsationsflockung und die Separation in einem gemeinsamen Raum bei aufsteigendem Strom des Rohabwassers mit den Fällungsmitteln durchgeführt wird,
- auf mindestens zwei Niveaus Pulsationen des aufsteigenden Flüssigkeitsstroms mit in einer mit der Strömungsrichtung übereinstimmenden Richtung auf- und abbewegbaren Siebböden erzeugt werden
und
- der mittlere Geschwindigkeitsgradient des aufsteigenden Stroms des Rohabwassers in Strömungsrichtung verringert wird.

2. Verfahren nach Anspruch 1, dadurch gekennzeichnet, daß die Pulsationen in Form von Schwingungen erzeugt werden.

3. Verfahren nach Anspruch 1 oder 2, dadurch gekennzeichnet, daß Pulsationen einer Frequenz von bis zu 2 Hz erzeugt werden.

4. Verfahren nach einem der Ansprüche 1 bis 3, dadurch gekennzeichnet, daß Pulsationen mit Amplituden von bis zu 1 m erzeugt werden.

5. Verfahren nach einem der Ansprüche 1 bis 4, dadurch gekennzeichnet, daß Unterbrechungen der Pulsationen angewandt werden.

6. Verfahren nach einem der Ansprüche 1 bis 5, dadurch gekennzeichnet, daß mechanisch miteinander gekoppelte, von einem Pulsationsantrieb betätigte Siebböden zur Erzeugung der Pulsationen herangezogen werden.

7. Verfahren nach einem der Ansprüche 1 bis 6, dadurch gekennzeichnet, daß Siebböden verwendet werden, deren Abstand voneinander und/oder deren freier Durchflußquerschnitt in Strömungsrichtung größer werden.

8. Schlammkontaktreaktor (1), insbesondere zur Durchführung des Verfahrens nach einem der Ansprüche 1 bis 7,
mit einem Behälter (2), in dem ein Flockungsraum, ein Separationsraum und ein Eindickungsraum (4) vorgesehen sind, einem am Boden angeordneten Zufluß (31) für das Rohabwasser mit Fällungsmitteln und einem am Flüssigkeitsspiegel im oberen Teil des Behälters (2) vorge sehenen Abfluß (51) für das aufbereitete Abwasser sowie einer Pulsationseinrichtung zur Erzielung von Pulsationen des behandelten Abwassers,
**dadurch gekennzeichnet, daß**
- der Flockungsraum und der Separationsraum zu einem einzigen Flockungs- und Separationsraum (3) vereinigt sind
und
- im Flockungs- und Separationsraum (3) ein System (6) aus mindestens zwei mit Durchlaßöffnungen versehenen, etwa waagrecht und übereinander angeordneten und parallel zur Strömungsrichtung des Abwassers mit vorgegebener Charakteristik auf- und abbewegbaren Siebböden (61, 62, 63) vorgesehen ist (Fig. 1).

9. Schlammkontaktreaktor nach Anspruch 8, dadurch gekennzeichnet, daß die Siebböden (61, 62, 63) an einer gemeinsamen Zugstange (7) befestigt sind, die mit einem Pulsationsantrieb (71) verbunden ist (Fig. 1).

10. Schlammkontaktreaktor nach Anspruch 8 oder 9, dadurch gekennzeichnet, daß der Pulsationsantrieb (71) so ausgelegt ist, daß die Siebböden (61, 62, 63) in sinusartigen Schwingungen oder mit Impulscharakteristik auf- und abbewegbar sind.

11. Schlammkontaktreaktor nach einem der Ansprüche 8 bis 10, dadurch gekennzeichnet, daß der Pulsationsantrieb (71) so ausgelegt ist, daß die Siebböden (61, 62, 63) mit einer Frequenz von bis zu 2 Hz und mit einer Amplitude von bis 1 m auf- und abbewegbar sind.

12. Schlammkontaktreaktor nach einem der Ansprüche 8 bis 11, dadurch gekennzeichnet, daß die Abstände zwischen den Siebböden (61, 62, 63) in Strömungsrichtung größer werden und der unterste Siebboden (61) in der untersten Stellung des Systems (6) knapp über dem Boden (22) des Flockungs- und Separationsraums (3) liegt.

13. Schlammkontaktreaktor nach einem der Ansprüche 8 bis 12, dadurch gekennzeichnet, daß der freie Durchflußquerschnitt der Siebböden (61, 62, 63) in Strömungsrichtung größer wird.

14. Schlammkontaktreaktor nach einem der Ansprüche 8 bis 13, dadurch gekennzeichnet, daß er mindestens zwei parallelgeschaltete Einheiten (35) umfaßt, die jeweils einen Flockungs- und Separationsraum (3) und einen Eindickungsraum (4) aufweisen, wobei entweder die Einheiten (35) durch Zwischenwände (34) voneinander getrennt sind und eine gemeinsame Rinne (5) für das aufbereitete Abwasser aufweisen oder für zwei benachbarte Flockungs- und Separationsräume (3) ein gemeinsamer, dazwischen angeordneter Eindickungsraum (4) vorgesehen ist und jede Einheit (35) eine Rinne (5) für das aufbereitete Abwasser aufweist.

15. Schlammkontaktreaktor nach einem der Ansprüche 8 bis 14, dadurch gekennzeichnet, daß mindestens zwei benachbarte Zugstangen (7) des Systems (6) der Siebböden (61, 62, 63) an einem gleicharmigen, mittig gelagerten Hebel (72) angelenkt sind, der vom Pulsationsantrieb (71) so bewegbar ist, daß sich die Zugstangen (7) gegensinnig auf- und abbewegen (Fig. 5, 6).

16. Schlammkontaktreaktor nach einem der Ansprüche 8 bis 15, dadurch gekennzeichnet, daß der Pulsationsantrieb (71) wählbare Hub- bzw. Bewegungscharakteristik aufweist.

FIG. 1

FIG. 2

EP 0 402 515 A1

FIG. 3

FIG. 4

FIG. 5

FIG. 6

FIG. 7

Europäisches Patentamt

EUROPÄISCHER RECHERCHENBERICHT

Nummer der Anmeldung

EP 89 11 0994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | CS-A-8 802 522 (LATAL et al.)(13.10.1989) --- | | B 01 D 21/00 C 02 F 1/52 |
| E | CS-A-8 802 521 (LATAL et al.)(13-10-1989) --- | | |
| A | PATENT ABSTRACTS OF JAPAN, Teil 6, Nr. 165 (C-121) 28. August 1982; & JP-A-57 081 809 (HITACHI KIDEN) --- | 1 | |
| A | FR-A-2 274 358 (VISH MINNO-GOLOSHKI) * Figur; Anspr. * --- | 1 | |
| A | DE-A-3 409 107 (NAGY) * Zusammenfassung * --- | 1 | |
| A | BE-A- 452 058 (HAMON) * Figur * ----- | 13 | |

RECHERCHIERTE SACHGEBIETE (Int. Cl.5)

B 01 D
C 02 F

Der vorliegende Recherchenbericht wurde für alle Patentansprüche erstellt

| Recherchenort | Abschlußdatum der Recherche | Prüfer |
|---|---|---|
| DEN HAAG | 21-02-1990 | KASPERS H.M.C. |